Europäisches Patentamt

European Patent Office

Office européen des brevets

(19)

(11) Numéro de publication : **0 093 817 B1**

(12) **FASCICULE DE BREVET EUROPÉEN**

(45) Date de publication du fascicule du brevet :
10.09.86

(21) Numéro de dépôt : **82400864.3**

(22) Date de dépôt : **10.05.82**

(51) Int. Cl.⁴ : **H 02 K 7/14, F 04 D 25/06, F 01 P 5/04, F 04 D 29/32**

(54) Unité de ventilation pour moteur à combustion interne de véhicule automobile.

(43) Date de publication de la demande :
16.11.83 Bulletin 83/46

(45) Mention de la délivrance du brevet :
10.09.86 Bulletin 86/37

(84) Etats contractants désignés :
BE DE GB IT LU NL SE

(56) Documents cités :
DE-A- 2 022 173
DE-A- 3 137 114
DE-B- 1 302 033
DE-C- 819 281
FR-A- 747 750
FR-A- 1 373 415
FR-A- 1 556 108
FR-A- 2 501 933
GB-A- 330 967
GB-A- 1 282 485
US-A- 1 996 195
US-A- 3 708 251
US-A- 3 914 629
US-A- 4 204 810
PATENTS ABSTRACTS OF JAPAN, vol. 4, no. 28 (E-1), (510), 8. March 1980

(73) Titulaire : **ACIERS ET OUTILLAGE PEUGEOT Société dite:**

**F-25400 Audincourt (Doubs) (FR)**

(72) Inventeur : **Barge, Jean**
**42 Rue d'Audincourt**
**F-25200 Montbeliard (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention est relative à une unité de ventilation pour le refroidissement du moteur à combustion interne d'un véhicule automobile comprenant une hélice de ventilation et un dispositif moteur électrique, tel que décrit dans US-A-4 204 810, alimenté par une source de courant continu par l'intermédiaire d'un circuit électronique générateur de signaux périodiques, et comportant un stator annulaire pourvu de bobinages d'induction et un rotor présentant un moyeu et un corps annulaire extérieur en un matériau ferromagnétique comportant à sa périphérie extérieure des aimants permanents de polarités alternées, et agencé pour coopérer électriquement avec les bobinages du stator et solidaire en rotation du moyeu par l'intermédiaire des pales de ladite hélice.

Cependant, le moteur décrit dans le brevet précité est destiné à actionner une pompe et non pas une hélice de ventilation pour le refroidissement d'un moteur à combustion interne.

Le document FR-A-747 750 décrit quant à lui un groupe refroidisseur comprenant une hélice de ventilation à plusieurs pales et une buse de guidage de l'écoulement de l'air.

D'après le brevet US-A-1 996 195, on connaît une unité de ventilation utilisable comme ventilateur domestique et présentant certaines des caractéristiques décrites précédemment.

Dans ce cas, les bobinages statoriques sont agencés pour être alimentés en courant alternatif et le rotor présente des barres d'induit, le tout constituant ainsi un moteur électrique de type asynchrone.

Sur le plan mécanique, le rotor annulaire est composé d'un paquet de tôles dont l'une des tôles d'extrémité est découpée et déformée à partir d'une tôle circulaire pleine de telle manière que celle-ci forme après les opérations de découpe et de formage, non seulement un élément du paquet de tôles mais encore l'hélice de ventilation. Par ailleurs, le moteur électrique ainsi agencé est placé dans un carter, également en tôle et ajouré de part et d'autre du moteur.

Cette unité de ventilation antérieure est totalement inappropriée pour l'usage dans un dispositif de refroidissement d'un moteur d'un véhicule automobile.

En effet, dans cette application particulière, l'unité de ventilation doit être entraînée par ce moteur à combustion interne et absorbe à plein régime une quantité non négligeable d'énergie. Pour fixer les idées, la puissance absorbée peut aller jusqu'à 500 à 600 Watts pour un nombre de tours de l'hélice pouvant aller jusqu'à 2 500 t/m. Il est donc excessivement important surtout en période de pénurie de carburant, de conférer à l'unité de ventilation un rendement maximal. Ceci n'est manifestement pas le cas dans le ventilateur du brevet US-A-1 996 195 dont la forme des pales et du carter extérieur conduit à des perturbations de l'écoulement d'air engendré et notamment à des turbulences telles que le rendement ne peut être que médiocre.

Par ailleurs, on sait que l'hélice d'un ventilateur du moteur d'un véhicule automobile fonctionne selon un régime qui est asservi à la température et pour certains régimes du moteur ou certaines vitesses du véhicule, il n'est pas nécessaire que l'hélice tourne pour atteindre la température de consigne. Bien entendu, on cherche à augmenter autant que possible ces périodes de repos du ventilateur, ce qui ne peut être obtenu que si pendant ces périodes de repos celui-ci oppose une résistance aussi faible que possible à l'écoulement de l'air vers le radiateur du moteur à combustion interne (ou ce moteur lui-même s'il est refroidi par air). En d'autres termes, il est essentiel que la « perméabilité » du ventilateur soit aussi grande que possible, ce vocable désignant en fait le pourcentage de la surface frontale du ventilateur qui n'est pas occupée par les pales, le moyeu et l'anneau extérieur (rotor) auquel sont fixées les extrémités des pales.

La perméabilité du ventilateur du US-A-1 996 195 est manifestement très médiocre également, les pales étant obtenues par déformation à partir du plan radial de l'hélice et le carter bouchant une partie importante de la surface frontale, notamment à la périphérie.

De plus, le moteur électrique décrit dans ce brevet étant à courant alternatif, il ne se prête pas à une utilisation dans un véhicule automobile dont le réseau électrique est toujours à courant continu.

Enfin, en raison des contraintes d'encombrements et de poids que l'on rencontre dans le domaine de l'automobile, il est indispensable que l'unité de ventilation soit la plus compacte et la plus légère possible et que son encombrement, notamment son encombrement axial, soit le plus faible possible.

L'invention a donc pour but de fournir une unité de ventilation du type général rappelé ci-dessus mais adopté pour être utilisé, avec un rendement et une perméabilité élevés et un encombrement aussi faible que possible, pour le refroidissement d'un moteur à combustion interne de véhicule automobile.

L'invention a donc pour objet une unité de ventilation pour le refroidissement du moteur à combustion interne d'un véhicule automobile comprenant une hélice de ventilation et un dispositif moteur électrique alimenté par une source de courant continu par l'intermédiaire d'un circuit électronique générateur de signaux périodiques, ce moteur comportant un stator annulaire pourvu de bobinages d'induction et un rotor présentant un moyeu et un corps annulaire extérieur en un matériau ferromagnétique comportant à sa périphérie extérieure des aimants permanents de polarités alternées, et agencé pour coopérer électriquement avec les bobinages du stator et solidaire en rotation du moyeu par l'intermédiaire des pales de ladite hélice, unité dans laquelle le corps annulaire extérieur du rotor est formé par une buse de guidage de l'écoulement d'air, cette buse s'étendant axialement et comportant à sa périphérie extérieure lesdits aimants permanents coopérant avec ledit stator, en ce que ledit moteur électrique est du type autosynchrone à courant continu, et en ce que l'hélice formée par lesdites pales est du type laminaire dont le profil ne provoque le décollement des filets d'air de l'écoulement qui l'entraîne, qu'au bord de fuite de ces pales.

Il résulte de ces caractéristiques que le moteur d'entraînement de l'unité de ventilation est parfaitement intégré dans la construction de la buse de guidage et de son dispositif de support, ce qui permet d'une part de limiter l'encombrement axial de l'unité à celui de la buse et d'autre part d'obtenir une perméabilité maximale, le diamètre entier de la buse étant, par construction, exploité pour la circulation de l'air puisque les extrémités des pales sont fixées sur la surface périphérique intérieur de la buse. En outre, le rendement aérodynamique de cette unité est très favorable grâce au profil particulier des pales. Enfin, le moteur étant à courant continu et partiellement intégré dans la buse, l'unité est parfaitement adaptée pour être incorporée dans un véhicule automobile.

L'invention est exposée ci-après plus en détail à l'aide des dessins représentant seulement plusieurs modes d'exécution, sur lesquels :

la Figure 1 est une vue de face d'une unité de ventilation réalisée suivant un premier mode de réalisation de l'invention ;

la Figure 2 est une vue prise selon la ligne 2-2 de la Fig. 1 ;

la Figure 3 montre une vue en perspective partielle de l'unité de ventilation des Fig. 1 et 2 vue du côté opposé par rapport à celui visible sur la Fig. 1 ;

la Figure 4 montre une vue analogue à celle de la Fig. 3 mais représentant un autre mode de réalisation de l'invention ;

la Figure 5 est une vue schématique d'un autre mode de réalisation de l'invention, la vue montrant l'implantation de l'unité de ventilation dans le compartiment moteur d'un véhicule automobile ;

la Figure 6 montre un premier schéma électrique très simplifié d'un circuit de commande électrique de l'unité de ventilation suivant l'invention ;

la Figure 7 est un graphique représentant les formes d'ondes apparaissant en divers points du schéma de la Fig. 6 ; et

la Figure 8 montre un second schéma électrique très simplifié d'un circuit de commande électrique.

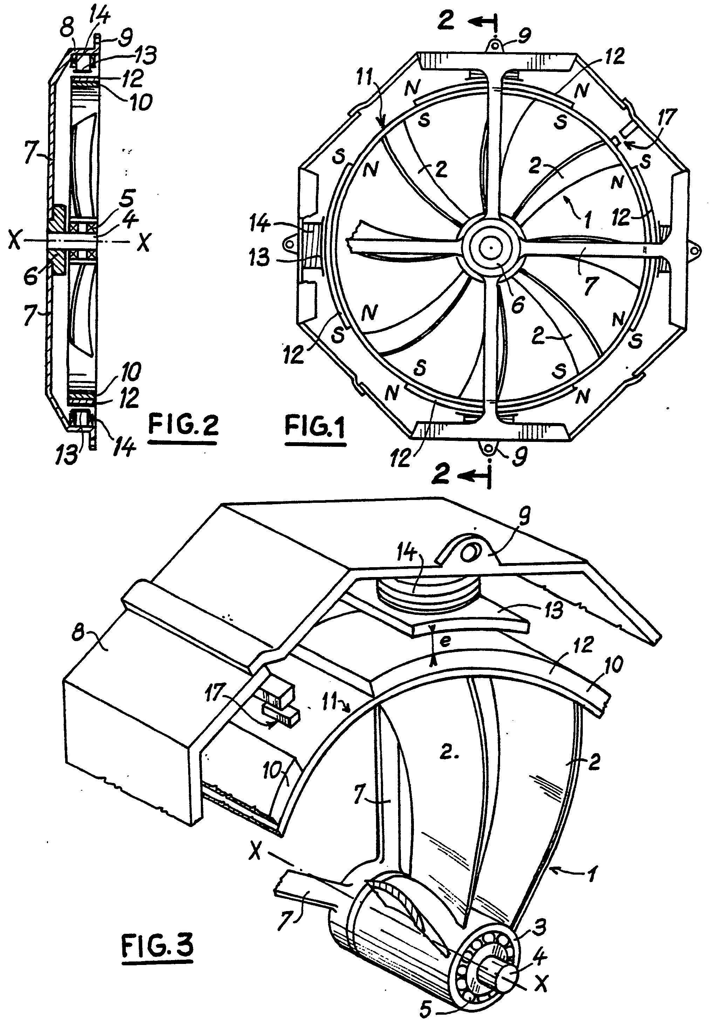

Les Figures 1 à 3 représentent donc un premier mode de réalisation de l'invention dans lequel l'unité de ventilation comporte une hélice 1, à quatre pales 2 par exemple, qui sont fixées à un moyeu 3 monté à rotation sur un arbre fixe 4 d'axe X-X. Des paliers 5 sont prévus entre le moyeu 3 et l'arbre 4 ; ces paliers peuvent être du type auto-lubrifiants ou à roulements.

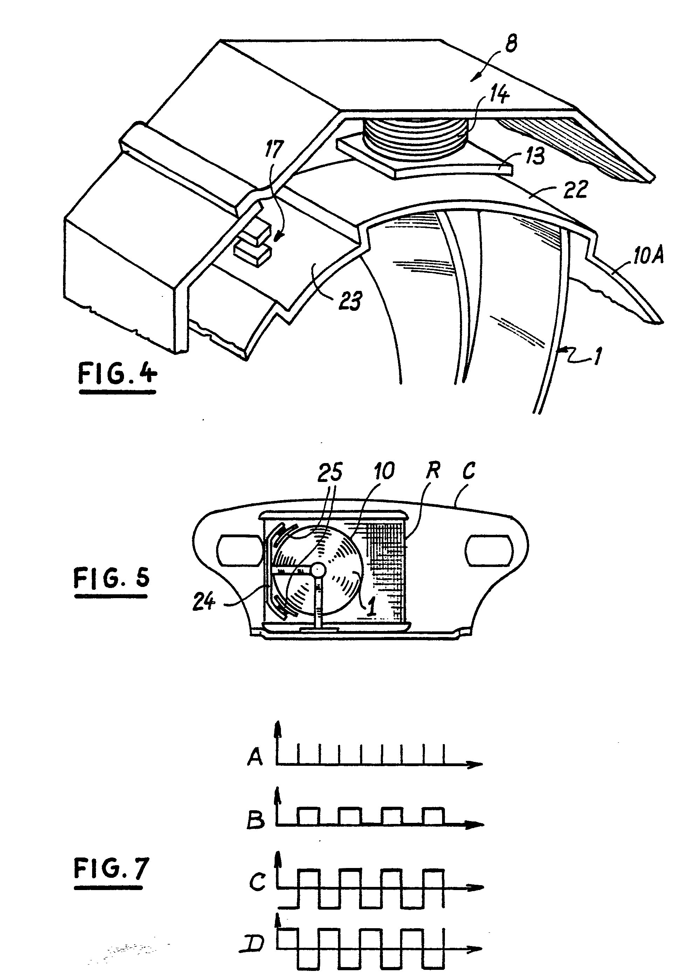

L'arbre 4 est solidaire d'une bague de fixation 6 à laquelle sont fixés des bras de support 7 s'étendant radialement vers l'extérieur. Dans le mode de réalisation représenté, ces bras sont au nombre de quatre, mais ce nombre peut être supérieur ou inférieur, par exemple deux (Fig. 5).

A leurs extrémités extérieures, les bras 7 sont recourbés pour leur fixation à une virole de même axe X-X que l'arbre 4, cette virole comportant des pattes de fixation 9. C'est à l'aide de ces pattes que l'unité de ventilation peut être rendue solidaire de la carrosserie d'un véhicule automobile.

Le moyeu 3 présente un diamètre juste suffisant pour être compatible avec le diamètre extérieur des paliers 5 et avec la bonne résistance de l'attache des pales 2 à ce moyeu. A leurs extrémités extérieures, les pales 2 sont solidaires d'une serge 10 qui constitue sur le plan aérodynamique, la buse de guidage de la circulation de l'air à travers l'unité de ventilation.

Les pales 2 présentent un profil et ont un calage (orientation par rapport au plan radial de l'hélice) tels que l'écoulement le long d'elles du courant d'air est laminaire et que les filets d'air n'en décollent qu'à leur bord de fuite. On obtient ainsi une excellente perméabilité du ventilateur qui peut être de 60 %. On peut trouver une description d'un profil approprié du profil de pales dans un rapport de la « National Advisory Comittee of Aeronautics » (NACA), organisme officiel des E.U.A. qui a édité un rapport à ce sujet en 1945.

La serge 10 est formée à partir d'un matériau ferro-magnétique bon conducteur du flux magnétique. Elle peut donc être réalisée par exemple en fer doux, en feuillard doux enroulé, en poudre ferro-magnétique agglomérée, etc. Elle assure en outre le maintien mécanique des extrémités des pales 2 dont la construction peut donc être plus légère que dans le cas d'une hélice portant des extrémités extérieures libres comme c'est le cas dans la technique antérieure.

Sur la surface périphérique extérieure 11 de la serge ou buse 10 sont fixés plusieurs aimants permanents 12. Comme dans le mode de réalisation décrit ici il s'agit d'un moteur électrique d'entraînement quadri-polaire, l'unité de ventilation des Fig. 1 à 3 comporte quatre aimants permanents 12. Bien entendu, l'invention n'est pas limitée à ce nombre.

Les aimants permanents 12 sont alternativement orientés N-S, S-N, N-S, etc... de telle sorte que la serge 10 contribue à fermer le champ de ces aimants du côté de l'arbre 4.

Les aimants permanents 12 peuvent être constitués de n'importe quel matériau connu pour cet usage dont le choix dépend uniquement de l'induction désirée. On peut choisir par exemple des alliages spéciaux magnétiques, des plastoferrites, des ferrites agglomérées, un alliage samarium-cobalt, etc. La buse 10 ainsi que les aimants permanents 12 constituent le rotor d'un moteur électrique d'entraînement, l'ensemble pouvant tourner par l'intermédiaire des pales 2 autour de l'arbre 4.

La virole 8 présente une forme octogonale dont les côtés sont alternativement fixés aux bras respectifs 7. Les facettes de cette virole correspondant aux bras 7 portent chacune un épanouissement polaire 13 qui est disposé de telle manière par rapport au périmètre extérieur des aimants 12 qu'il subsiste un entrefer e. Les épanouissements polaires 13 sont formés d'un matériau ferromagnétique qui peut être l'un des matériaux déjà mentionné ci-dessus. Grâce à cette construction, la virole 8 et ses épanouissements polaires 13 peuvent fermer le circuit magnétique du moteur en conduisant le flux magnétique engendré par les aimants permanents 12. Cet ensemble constitue donc le stator du moteur électrique de l'unité de ventilation. Bien entendu, tout autre disposition de la partie magnétique du stator peut être prévue.

Chaque épanouissement polaire 13 porte une bobine 14 pour permettre la création de l'induction nécessaire au fonctionnement du moteur. L'induction ainsi engendré crée un champ magnétique dans l'entrefer e et provoque, par action conjuguée des aimants 12 et de la conduction magnétique de la buse 10, des forces mécaniques qui dépendent des sens des champs engendrés par les bobines 14 et des sens du champ des aimants au voisinage des épanouissements polaires 13.

L'ensemble que l'on vient de décrire constitue ainsi un moteur pas à pas auto-synchrone.

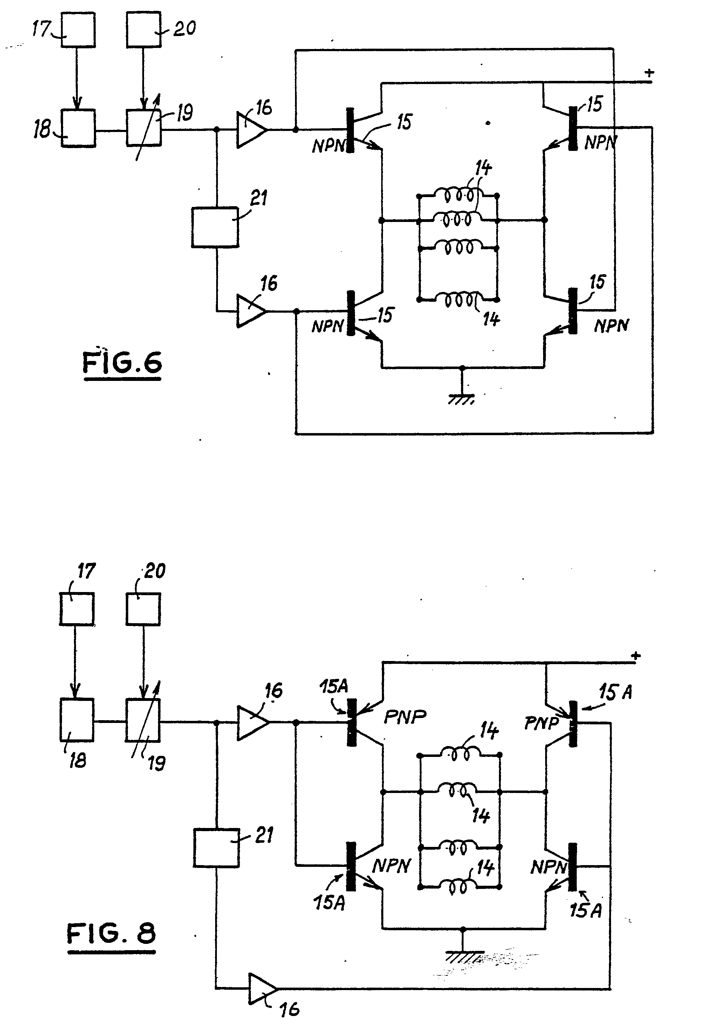

Le moteur électrique est alimenté par un circuit électronique dont le montage de principe est représenté sur la Fig. 6 à laquelle on doit se référer maintenant.

Les bobines 14 sont raccordées en parallèle et associées à des transistors de commande 15 qui sont du type NPN. Les circuits collecteur-émetteur des transistors 15 forment les branches d'un pont dont une diagonale est connectée à une source d'alimentation et dont l'autre diagonale est connectée aux bobines 14 en parallèle. Les bases de ces transistors sont attaquées par deux amplificateurs 16 étant entendu que chaque amplificateur alimente deux transistors montés respectivement dans des branches opposées du pont de transistors.

Les signaux de sortie des amplificateurs 16 sont engendrés à partir d'un détecteur 17 qui est destiné à fournir un signal représentant la position angulaire du rotor 10, 12 du moteur électrique par rapport à son stator 8, 13, 14. Ce détecteur peut être un capteur à magnéto-résistance, un détecteur de Hall, une bobine d'induction, un système opto-électrique ou analogue. Le signal émis par le détecteur 17 (représenté en A sur la Fig. 7) est appliqué à un diviseur de fréquence 18 dans lequel il est mis en forme, sa fréquence étant divisée par deux. Il en résulte le signal représenté en B sur la Fig. 7. La sortie du diviseur de fréquence 18 est appliquée à un circuit de déphasage 19 destiné à assurer le démarrage 19 destiné à assurer le démarrage du moteur et également, facultativement, à permettre une variation de la vitesse de l'ensemble en fonction d'un paramètre extérieur qui, dans l'application à un moteur à combustion interne, peut être la température du fluide calo-porteur circulant dans le circuit de refroidissement de ce moteur. Le paramètre extérieur peut être appliqué par l'intermédiaire d'un circuit de détection 20 connecté au déphaseur 19.

Le signal de sortie du déphaseur 19 est alors directement appliqué à l'un des amplificateurs 16, tandis que l'autre amplificateur reçoit ce même signal par l'intermédiaire d'un déphaseur de 180°, 21. Ainsi, on peut envoyer dans deux paires de bobines opposées des courants dont la variation est celle représentée respectivement par les courbes C et D de la Fig. 7. On voit que ces courants sont en opposition de phase. Ainsi, lorsque les bobines 14 sont alimentées à l'aide de ces courants, l'unité de ventilation tournera à une vitesse qui se régule d'elle-même en fonction d'une part des pertes mécaniques, magnétiques et électriques et d'autre part du couple résistant dû à la rotation de l'hélice 1.

Pour obtenir un rendement satisfaisant du moteur, le détecteur 17 doit être calé angulairement de façon qu'il se trouve exactement à mi-chemin entre deux épanouissements polaires 13 successifs.

Le déphaseur 19 permet de modifier dans le temps l'instant où le signal délivré par le détecteur 17 est appliqué au montage.

Le démarrage dans un sens donné, c'est-à-dire celui dans lequel travaille l'hélice 1, est obtenu par construction en décalant légèrement l'un des épanouissements polaires 13 par rapport aux autres. Il est également possible de créer une asymétrie au niveau de la valeur de l'entrefer e face aux épanouissements polaires 13.

Sur la Fig. 4 on a représenté une variante de l'unité de ventilation dans laquelle il est prévu une buse 10A qui, au lieu d'être cylindrique comme dans le mode de réalisation des Fig. 1 à 3, est « ondulée » de telle sorte que son profil extérieur présente des plages 22 radialement plus extérieures que les plages 23, les premières remplissant alors le rôle des aimants permanents du précédent mode de réalisation. Il en résulte que ce moteur présente un entrefer variable suivant sa périphérie en constituant un moteur pas à pas à réluctance.

Les spécialistes comprendront que d'autres variantes peuvent être apportées dans la construction de la partie électrique du moteur d'entraînement intégré dans l'unité de ventilation comme décrit ci-dessus.

L'arbre 4 peut être fixé dans un support comme décrit précédemment, mais il est également possible de le rendre solidaire directement d'une partie de carrosserie de véhicule, par exemple telle que la calandre avant ou la face avant multifonction des véhicules modernes.

La buse 10 ou 10A peut être rapportée aux pales de l'hélice ou être venue de matière avec ces pales. De même, les épanouissements polaires 13 peuvent être rapportés sur la virole 8 ou être venus de formage avec celle-ci. Les bobines 14 peuvent être avantageusement constituées de bandes d'aluminium anodisées.

La virole 8 peut être réalisée en une seule pièce ou être constituée d'éléments séparés comme cela a été représenté sur les figures.

On a représenté sur la Fig. 8, un autre schéma électrique possible pour alimenter les bobines 14. Ce schéma ne diffère de celui de la Fig. 6 que par les transistors 15A qui sont ici du type PNP ou NPN comme représenté. Dans ce cas, les bases des transistors sont attaquées par les amplificateurs 16, dont chacun est relié à deux transistors complémentaires du même côté du pont de transistors.

Les circuits électriques représentés sur les Fig. 6 et 8 ne constituent que des exemples, d'autres montages pouvant être prévus employant par exemple des transistors bi-polaires ou des transistors de puissance en technologie MOS. Le montage dans son ensemble peut être réalisé sur un circuit intégré.

La Fig. 5 montre une variante de l'unité de ventilation suivant l'invention dans laquelle le stator du moteur électrique n'entoure pas complètement la buse 10 et l'hélice 1. Dans ce cas, ce stator comporte un élément de circuit magnétique 24 ne portant que deux épanouissements polaires 25 munis de bobines, la buse 10 étant, par ailleurs, identique à celle des précédentes figures. Comme représenté, cette unité de ventilation est montée devant le radiateur R placé devant le moteur à combustion interne (non représenté) de la carrosserie C d'un véhicule automobile. Bien entendu, d'autres dispositions rentrent dans le cadre de l'invention.

D'après la description qui précède, on voit que l'invention apporte plusieurs avantages.

La longueur axiale totale de l'unité de ventilation reste réduite au minimum et peut, dans le cas où l'arbre 4 est fixé directement dans un support tel que la carrosserie d'un véhicule, être limité à la seule longueur axiale de l'hélice.

Le rendement aérodynamique de la ventilation est nettement amélioré par rapport aux dispositions classiques car, d'une part le profil des pales ne provoque aucune turbulence et, d'autre part, la buse 10 ou 10A est reliée directement aux pales, et il n'y a donc pratiquement aucune perturbation par centrifugation du courant d'air véhiculé par l'unité de ventilation.

La perméabilité de l'ensemble est considérable d'une part par le très faible diamètre du moyeu 3 de l'hélice 1 et d'autre part également par le fait que les pales ont une orientation qui est pratiquement axiale.

L'asservissement de cette unité de ventilation est réalisable très commodément grâce au montage électronique de la Fig. 6 dont la commande peut être réalisée en fonction d'un paramètre tel que la température.

**Revendications**

1. Unité de ventilation pour le refroidissement du moteur à combustion interne d'un véhicule automobile comprenant une hélice de ventilation (1) et un dispositif moteur électrique (8 ; 10 ; 10A) alimenté par une source de courant continu par l'intermédiaire d'un circuit électronique (15 ; 15A ; 16 à 21) générateur de signaux périodiques, ce moteur comportant un stator annulaire (8) pourvu de bobinages d'induction (14) et un rotor (10 ; 10A) présentant un moyeu (3) et un corps annulaire extérieur en un matériau ferromagnétique comportant à sa périphérie extérieure des aimants permanents (12 ; 22) de polarités alternées, et agencé pour coopérer électriquement avec les bobinages du stator et solidaire en rotation du moyeu par l'intermédiaire des pales (2) de ladite hélice (1), unité dans laquelle le corps annulaire extérieur du rotor (10 ; 10A) est formé par une buse de guidage de l'écoulement d'air, cette buse s'étendant axialement et comportant à sa périphérie extérieure lesdits aimants permanents (12 ; 22) coopérant avec ledit stator (8), en ce que ledit moteur électrique est du type autosynchrone à courant continu, et en ce que l'hélice (1) formée par lesdites pales (2) est du type laminaire dont le profil ne provoque le décollement des filets d'air de l'écoulement qui l'entraîne, qu'au bord de fuite de ces pales.

2. Unité suivant la revendication 1, caractérisée en ce que lesdits aimants permanents (12) de polarités alternées sont fixés sur la surface périphérique extérieure de la buse (10).

3. Unité suivant la revendication 1, caractérisée en ce que ladite buse (10A) est réalisée selon un profil légèrement ondulé dont les parties distinctes (22, 23) constituent des entrefers distincts avec ledit stator (8, 13, 14).

4. Unité de ventilation suivant l'une quelconque des revendications 1 à 3, caractérisée en ce que ledit stator comporte une virole (8) coaxiale à la buse (10 ; 10A).

5. Unité suivant la revendication 4, caractérisée en ce que ladite virole (8) est réalisée en plusieurs pièces ou d'une seule pièce à partir d'un matériau ferro-magnétique.

6. Unité suivant l'une quelconque des revendications 4 et 5, caractérisée en ce que des épanouissements polaires (13) sont prévus de distance en distance sur la surface intérieure de ladite virole en regard de ladite buse (10 ; 10A) et en ce que chaque épanouissement polaire (13) porte une bobine d'excitation du moteur d'entraînement.

7. Unité suivant l'une quelconque des revendications 1 à 6, caractérisée en ce que les bobinages (14) du stator du moteur électrique sont alimentés sélectivement par des commutateurs à semi-conducteurs (15) dudit circuit électronique et en ce que ces commutateurs sont commandés à leur tour par un détecteur de position (17) destiné à détecter la position relative du stator et du rotor dudit moteur électrique.

8. Unité suivant la revendication 7, caractérisée en ce que ledit détecteur (17) est couplé auxdits commutateurs à semi-conducteurs par l'intermédiaire d'un circuit de déphasage (19) dont le degré de déphasage peut être commandé en fonction d'un paramètre de régulation tel que la température.

**Claims**

1. A fan unit for cooling the internal combustion engine of an automobile vehicle comprising a fan propeller (1) and an electric motor device (8 ; 10 ; 10A) supplied with current by a DC source through an electronic circuit (15 ; 15A ; 16 to 21) generating periodic signals, this motor comprising an annular stator (8) provided with field coils (14) and a rotor (10 ; 10A) having a hub (3) and an outer annular body of a ferromagnetic material comprising on its outer periphery permanent magnets (12 ; 22) having alternating polarities, and adapted to cooperate electrically with the coils of the stator and connected to rotate with the hub through the medium of the blades (2) of said propeller (1), in which unit the outer annular body of the rotor (10 ; 10A) is formed by a nozzle for guiding the air flow, this nozzle extending axially and having on its outer periphery said permanent magnets (12 ; 22) cooperating with said stator (8), said electric motor is of the DC autosynchronous type and the propeller (1) formed by said blades (2) is of the stream-line type whose profile only produces the detachment of the streams of air of the flow driving the propeller at the trailing edge of these blades.

2. A unit according to claim 1, characterised in that said permanent magnets (12) of alternating polarities are fixed to the outer peripheral surface of the nozzle (10).

3. A unit according to claim 1, characterised in that said nozzle (10A) is constructed in accordance with a slightly corrugated profile of which distinct parts (22, 23) constitute distinct air gaps with said stator (8, 13, 14).

4. A fan unit according to any one of the claims 1 to 3, characterised in that said stator comprises a sleeve (8) coaxial with the nozzle (10 ; 10A).

5. A unit according to claim 4, characterised in that said sleeve (8) is made in a plurality of parts or in a single part from a ferromagnetic material.

6. A unit according to any one of the claims 4 and 5, characterised in that pole enlargements (13) are provided at intervals on the inner surface of said sleeve in facing relation to said nozzle (10 ; 10A) and each pole enlargement (13) carries an excitation coil of the driving motor.

7. A unit according to any one of the claims 1 to 6, characterised in that the coils (14) of the stator of the electric motor are supplied with current selectively by semi-conductor switches (15) of said electronic circuit and these switches are controlled in turn by a position detector (17) adapted to detect the relative position of the stator and the rotor of said electric motor.

8. A unit according to claim 7, characterised in that said detector (17) is coupled with said semi-conductor switches through a phase-shifting circuit (19) whose phase shift may be controlled as a function of a regulating parameter, such as the temperature.

**Patentansprüche**

1. Ventilatoreinheit zur Kühlung eines Verbrennungsmotors eines Kraftfahrzeugs, mit einem Ventilationsflügelrad (1) und einer Elektromotorvorrichtung (8 ; 10 ; 10A), welche durch eine Gleichspannungsquelle über eine elektronische Schaltung (15 ; 15A, 16 bis 21) zur Erzeugung periodischer Signale gespeist wird, wobei der Motor einem mit Induktionsspulen (14) versehenen ringförmigen Stator (8) und einen Rotor (10 ; 10A) umfaßt, der eine Nabe (3) und einen äußeren ringförmigen Körper aus ferromagnetischem Material aufweist, der an seinem äußeren Umfang Permanentmagneten (12 ; 22) abwechselnder Polarität aufweist und so angeordnet ist, daß er elektrisch mit den Spulen des Stators zusammenwirkt, und der mit der Nabe über Flügel (2) des Flügelrads (1) drehfest verbunden ist, wobei in der Einheit der ringförmige äußere Körper des Rotors (10 ; 10A) durch eine Führungsdüse für die Luftströmung gebildet ist, wobei sich diese Düse axial erstreckt und an ihrem äußeren Umfang die mit dem Stator (8) zusammenwirkenden Permanentmagneten (12 ; 22) aufweist, wobei der Elektromotor vom autosynchronen Gleichstromtyp ist, und wobei das durch die Flügel (2) gebildete Flügelrad (1) vom laminaren Typ ist, dessen Profil ein Ablösen der Luftströmungslinien der dieses antreibenden Strömung nur an der Hinterkante dieser Flügel bewirkt.

2. Einheit nach Anspruch 1, dadurch gekennzeichnet, daß die Permanentmagneten (12) abwechselnder Polarität auf der äußeren Umfangsfläche der Düse (10) befestigt sind.

3. Einheit nach Anspruch 1, dadurch gekennzeichnet, daß die Düse (10A) nach einem leicht gewellten Profil ausgeführt ist, dessen verschiedene Abschnitte (22, 23) verschiedene Luftspalte mit dem Stator (8, 13, 14) bilden.

4. Ventilatoreinheit nach irgendeinem der Ansprüche 1 bis 3, dadurch gekennzeichnet, daß der Stator einen mit der Düse (10 ; 10A) koaxialen Ring (8) aufweist.

5. Einheit nach Anspruch 4, dadurch gekennzeichnet, daß der Ring (8) in mehreren Stücken oder einstückig aus einem ferromagnetischen Material ausgeführt ist.

6. Einheit nach irgendeinem der Ansprüche 4 und 5, dadurch gekennzeichnet, daß Polschuhe (13) in Abständen längs der Innenfläche des Rings der Düse (10 ; 10A) gegenüberstehend vorgesehen sind und daß jeder Polschuh (13) eine Spule zur Erregung des Antriebsmotors trägt.

7. Einheit nach irgendeinem der Ansprüche 1 bis 6, dadurch gekennzeichnet, daß die Spulen (14) des Stators des Elektromotors ausgewählt durch Halbleiterschalter (15) der elektronischen Schaltung gespeist werden und daß die Schalter ihrerseits durch einen Stellungsdetektor (17) gesteuert werden, der zur Feststellung der Relativstellung von Stator und Rotor des Elektromotors bestimmt ist.

8. Einheit nach Anspruch 7, dadurch gekennzeichnet, daß der Detektor (17) mit den Halbleiterschaltern über eine Phasenschiebeschaltung (19) verbunden ist, deren Ausmaß der Phasenverschiebung in Abhängigkeit von einem Regelungsparameter, wie der Temperatur, gesteuert werden kann.

0 093 817

FIG.2

FIG.1

FIG.3

FIG.4

FIG. 5

FIG. 7

FIG.6

FIG. 8

3